# EUROPEAN PATENT SPECIFICATION

(11) **EP 4 024 363 B1**
(45) Date of publication and mention of the grant of the patent: **17.04.2024**
(21) Application number: 20855876.7
(22) Date of filing: 26.05.2020
(51) Int. Cl.: G08G 1/015, G08G 1/04, G06T 7/00, G06V 20/54

(54) **AXLE NUMBER MEASUREMENT DEVICE, AXLE NUMBER MEASUREMENT SYSTEM, AND AXLE NUMBER MEASUREMENT METHOD**
ACHSZAHLMESSVORRICHTUNG, ACHSZAHLMESSSYSTEM UND ACHSZAHLMESSVERFAHREN
DISPOSITIF DE MESURE DU NOMBRE D'ESSIEUX, SYSTÈME DE MESURE DU NOMBRE D'ESSIEUX ET PROCÉDÉ DE MESURE DU NOMBRE D'ESSIEUX

(30) Priority: 29.08.2019 JP 2019157448
(43) Date of publication of application: 06.07.2022
(73) Proprietor: Panasonic Intellectual Property Management Co., Ltd., Osaka-shi, Osaka 540-6207 (JP)
(72) Inventor: MARUYAMA, Yuki, Osaka-shi, Osaka 540-6207 (JP); IMAGAWA, Taro, Osaka-shi, Osaka 540-6207 (JP); KUSAKA, Hiroya, Osaka-shi, Osaka 540-6207 (JP); NODA, Akihiro, Osaka-shi, Osaka 540-6207 (JP)
(74) Representative: Vigand, Philippe
(86) International application number: PCT/JP2020/020800
(87) International publication number: WO 2021/038991

(56) References cited:
- WO-A1-2013/076829
- WO-A1-2019/064682
- JP-A- 2007 323 117
- JP-A- 2012 022 573
- JP-A- 2017 220 076
- US-A1- 2017 277 952
- US-A1- 2017 330 454

## Description

### [Technical Field]

The present disclosure relates to an axle number measurement device, an axle number measurement system, and an axle number measurement method for measuring a total number of axles of a vehicle.

### [Background Art]

Some vehicles having three or more axles are equipped with a lift axle mechanism that lifts up at least one axle so that the tires of the lifted-up axle do not contact the ground.

Meanwhile, some toll roads have a toll system where the toll varies depending on the total number of axles of tires which are in contact with the ground during traveling.

Such toll roads need an axle number measurement device that measures, for each traveling vehicle, a total number of axles of tires in contact with the ground.

For example, Patent Literature (PTL) 1 discloses, as an example of the axle number measurement device, a vehicle-type discriminating device that uses an image captured by a camera to detect a tire in contact with the ground by making use of the low luminance of the ground portion between the tire and the road surface. The document US 2017/277952 discloses a method and an axle-counting device for contact-free axle counting of a vehicle and an axle-counting system for road traffic.

### [Citation List]

### [Patent Literature]

[PTL 1] Japanese Unexamined Patent Application Publication No. H11-86185

### [Summary of Invention]

### [Technical Problem]

However, when the above axle number measurement device is to detect a tire in contact with the ground using an image captured in an environment where noise in the image increases, such as at night, the detection precision decreases and the total number of axles of tires in contact with the ground cannot be accurately measured.

In view of the above, an object of the present disclosure is to provide an axle number measurement device, an axle number measurement system, and an axle number measurement method capable of accurately measuring a total number of axles of tires that are in contact with the ground even in an environment where noise in an image increases, such as at night.

### [Solution to Problem]

An axle number measurement device according to an aspect of the present disclosure is an axle number measurement device that measures a total number of axles of a vehicle that travels on a road according to claim 1.

An axle number measurement device according to an aspect of the present disclosure is an axle number measurement device that measures a total number of axles of a vehicle that travels on a road according to claim 6.

An axle number measurement system according to an aspect of the present disclosure includes: the axle number measurement device described above; a first imaging device that captures the first captured image; and a second imaging device that performs image capturing to generate the depth image.

An axle number measurement method according to an aspect of the present disclosure is an axle number measurement method of measuring a total number of axles of a vehicle that travels on a road according to claim 8.

### [Advantageous Effects of Invention]

With an axle number measurement device and the like according to an aspect of the present disclosure, it is possible to accurately measure a total number of axles of tires which are in contact with the ground even in an environment where noise in an image increases, such as at night.

### [Brief Description of Drawings]

[FIG. 1A]

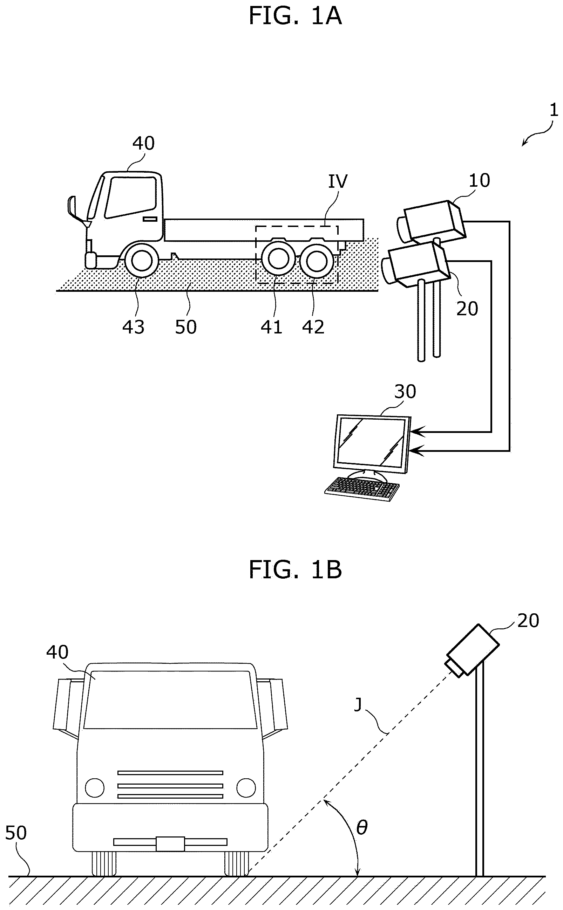

   FIG. 1A is a diagram illustrating a schematic configuration of an axle number measurement system according to Embodiment 1.
[FIG. 1B]
   FIG. 1B is a diagram illustrating an example of provision of an imaging device according to Embodiment 1.
[FIG. 2]

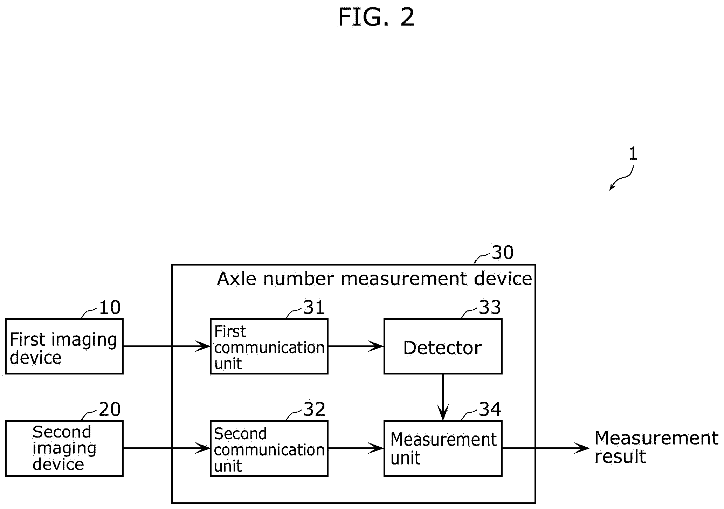

   FIG. 2 is a block diagram illustrating a functional configuration of the axle number measurement system according to Embodiment 1.
[FIG. 3]

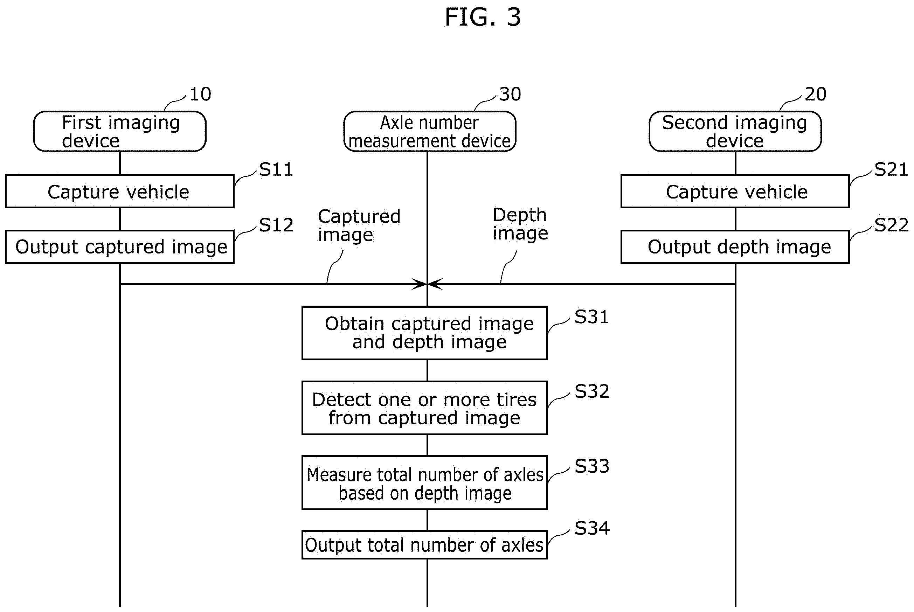

   FIG. 3 is a sequence diagram illustrating operations performed by the axle number measurement system according to Embodiment 1.
[FIG. 4]

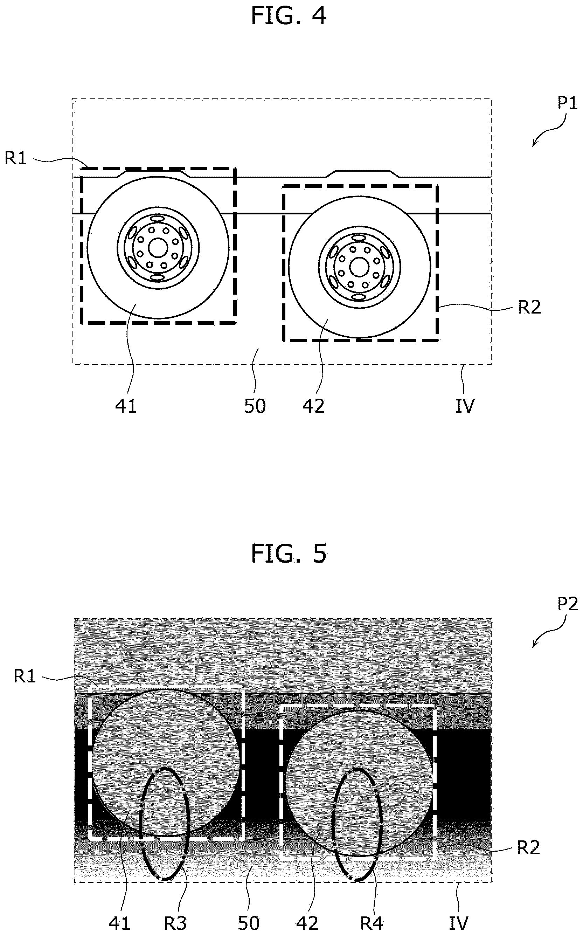

   FIG. 4 is a diagram illustrating an example of a captured image according to Embodiment 1.
[FIG. 5]
   FIG. 5 is a diagram illustrating an example of a depth image according to Embodiment 1.
[FIG. 6]

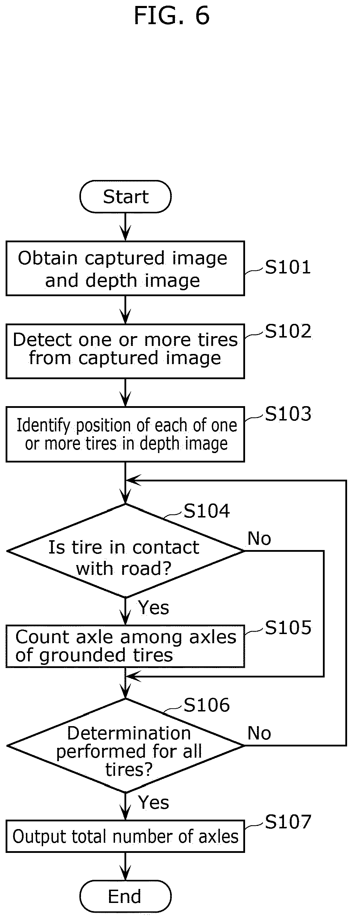

   FIG. 6 is a flowchart illustrating operations performed by the axle number measurement device according to Embodiment 1.
[FIG. 7]

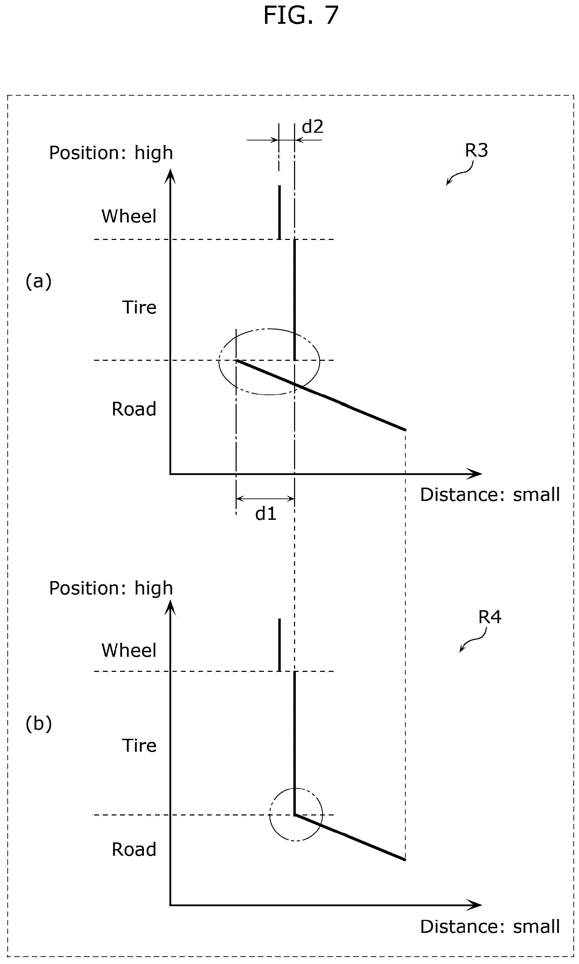

   FIG. 7 is a diagram for describing determination as to whether a tire and the road are in contact according to Embodiment 1.
[FIG. 8]

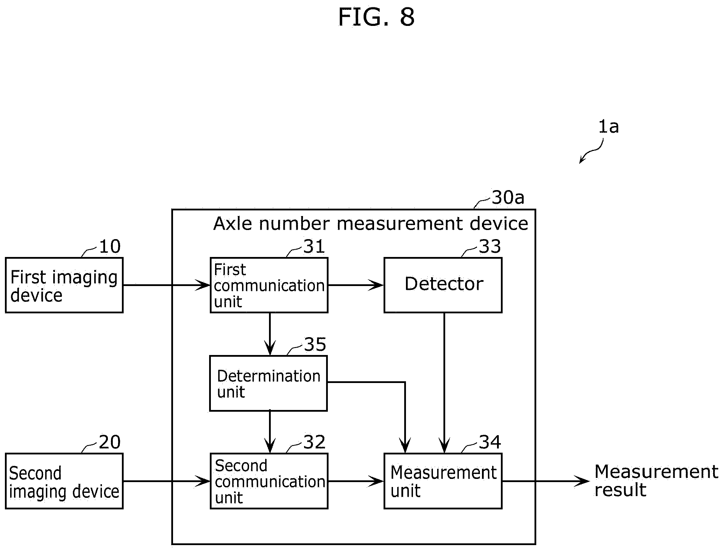

   FIG. 8 is a block diagram illustrating a functional configuration of an axle number measurement system according to a variation of Embodiment 1.
[FIG. 9]

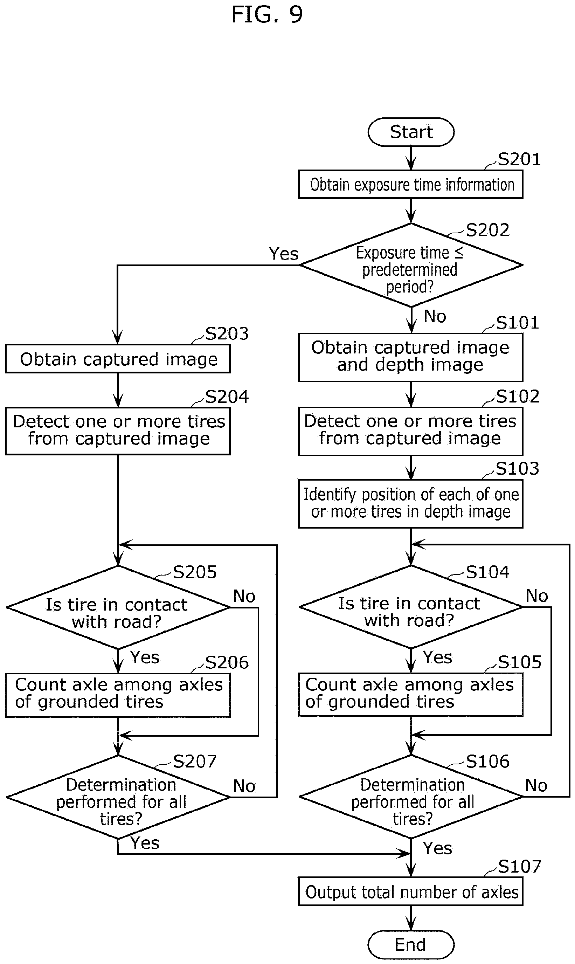

   FIG. 9 is a flowchart illustrating operations performed by a axle number measurement device according to the variation of Embodiment 1.
[FIG. 10]

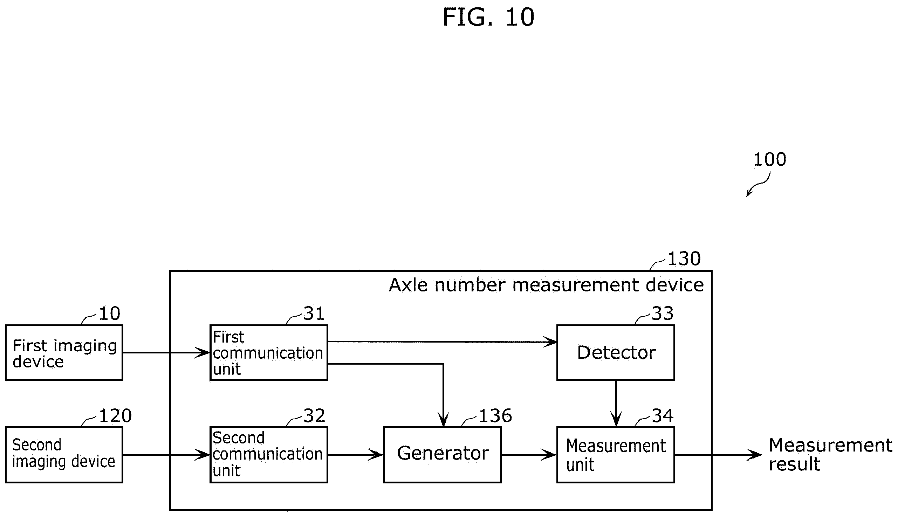

   FIG. 10 is a block diagram illustrating a functional configuration of an axle number measurement system according to Embodiment 2.
[FIG. 11]

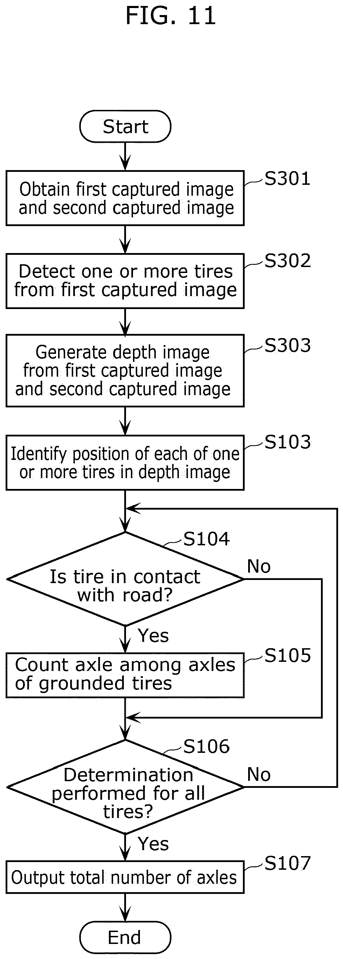

   FIG. 11 is a flowchart illustrating operations performed by an axle number measurement device according to Embodiment 2.

### [Description of Embodiments]

### (Overview of the Present Disclosure)

A camera that captures an image for measuring a total number of axles of a vehicle is provided near a toll gate on a highway, for example. Also, a road light etc. is provided near the toll gate, and the road is illuminated at a certain degree of brightness. When the camera captures an image of a vehicle in such a situation at night, for example, the amount of light near the road is low, causing the captured image to have a high proportion of noise. When a tire in contact with the ground is to be detected using such an image containing noise, it is difficult to accurately determine whether the tire is in contact with the ground.

Further, when an image of a vehicle is to be captured by a camera at night, for example, the exposure time becomes long because the road light does not provide a large amount of light near the road. For example, the exposure time at night becomes longer than the exposure time during the day. As a result, the obtained image becomes a blurred image in which the vehicle trails. For example, the image becomes blurred as though the tire is trailing. The blurred image is an example of an image containing noise.

It is possible to determine whether a tire is in contact with the ground based on whether the tire is rotating, but with a moving image including two or more blurred images described above, it is difficult to accurately determine whether the tire is rotating. That is to say, it is difficult to accurately detect a tire in contact with the ground.

In view of the above, the inventors have diligently studied an axle number measurement device and the like that accurately measure a total number of axles of grounded tires even in an environment where noise in an image increases, such as at night, and have invented the axle number measurement device and the like described below. Note that a tire which is in contact with the road is also referred to as a grounded tire.

According to the invention, the axle number measurement device according to an aspect of the present disclosure can measure the total number of axles that support grounded tires using the depth image. Therefore, it is possible to accurately measure a total number of axles of grounded tires even in an environment where noise in the first captured image increases, such as at night. Note that the measurement unit obtains the position of a tire in the depth image based on the position of the tire in the first captured image.

Also, for example, when the first captured image is an image captured in an environment having a brightness higher than or equal to a predetermined level, the measurement unit is further configured to determine from the first captured image whether the tire is in contact with the road, and measure the total number of axles based on a result of the determination when the first captured image is the image captured in the environment.

In the environment having a brightness higher than or equal to a predetermined level, external light may enter an imaging device that measures distances used for generating the depth image. If external light enters the imaging device, the depth image generated contains noise caused by the external light. As a result, it is not possible to accurately measure the total number of axles of grounded tires when the measurement is performed using the depth image containing noise caused by external light.

In contrast, the axle number measurement device according to an aspect of the present disclosure does not measure a total number of axles of grounded tires using the depth image containing noise caused by external light, but measures a total number of axles of grounded tires using the first captured image that is less influenced by noise. Therefore, it is possible to accurately measure the total number of axles of grounded tires even in an environment having a brightness higher than or equal to a predetermined level. Note that if the first captured image is captured in an environment having a brightness higher than or equal to a predetermined level, such as in the daytime, the influence of noise that occurs when the subject is captured under low light conditions is reduced. That is to say, it is possible to more accurately measure the total number of axles of grounded tires using the first captured image captured in an environment having a brightness higher than or equal to a predetermined level.

Also, for example, the measurement unit is configured to determine the continuity based on a change amount from the first distances to the second distances regarding the tire.

Accordingly, when the change amount from the first distances to the second distances is less than or equal to a predetermined value, the axle number measurement device according to an aspect of the present disclosure can determine that there is a continuity between the first distances and the second distances and determine the axle as an axle that supports a tire in contact with the road. Therefore, it is possible to more accurately measure the total number of axles.

Also, for example, the measurement unit is configured to determine that the tire is not in contact with the road when the second distances are greater than the first distances by an amount greater than a predetermined amount at time of change from the first distances to the second distances.

Accordingly, the measurement unit can determine, using the predetermined amount, whether the tire is in contact with the road. With use of the predetermined amount set appropriately, the measurement unit can easily and precisely determine whether the tire is in contact with the road.

Also, for example, the depth image includes the first distances and the second distances measured by a time of flight (TOF) method.

Accordingly, the axle number measurement device according to an aspect of the present disclosure can obtain an accurate depth image even in an environment where noise in an image increases, such as at night.

Also, for example, the second obtaining unit is configured to obtain a second captured image that includes the tire captured from a viewpoint different from a viewpoint of the first captured image, and generate the depth image based on the first captured image and the second captured image.

Accordingly, the axle number measurement device according to an aspect of the present disclosure can obtain a depth image (for example, a depth image including the first distances and the second distances) using two captured images. Moreover, it is possible to generate a depth image using, for example, an existing imaging device without having to newly provide a TOF camera or the like to generate a depth image.

The first captured image captured in an environment having a brightness higher than or equal to a predetermined level is insusceptible to noise that occurs when the subject is captured under low light conditions. That is to say, it is possible to accurately measure the total number of axles of grounded tires using the first captured image captured in an environment having a brightness higher than or equal to a predetermined level.

For example, a depth image (for example, a depth image obtained by a TOF method) obtained in an environment having a brightness higher than or equal to a predetermined level is an image containing noise caused by external light. As a result, it is not possible to accurately measure the total number of axles of grounded tires when the measurement is performed using the depth image containing noise caused by external light.

Thus, by using the first captured image captured in an environment having a brightness higher than or equal to a predetermined level as described above, it is possible to accurately measure the total number of axles of grounded tires as compared to the case of using the depth image obtained in an environment having a brightness higher than or equal to the predetermined level.

Also, an axle number measurement system according to an aspect of the present disclosure includes: the axle number measurement device described above; a first imaging device that captures the first captured image; and a second imaging device that performs image capturing to generate the depth image.

Accordingly, it is possible to measure a total number of axles of grounded tires using the first captured image and the depth image that are from the first imaging device and the second imaging device included in the axle number measurement system, without having to obtain a captured image or the like from outside.

The axle number measurement method yields the same advantageous effects as those of the axle number measurement device described above.

Note that these general or specific aspects may be implemented using a system, a method, an integrated circuit, a computer program, or a computer-readable, non-transitory recording medium such as a CD-ROM, or any combination of systems, methods, integrated circuits, computer programs, or recording media. The program may be stored in a recording medium in advance, or may be supplied to a recording medium via a wide area communication network including the Internet, for example.

The following specifically describes embodiments with reference to the drawings. Note that the following embodiments each illustrate a general or specific example. The numerical values, shapes, materials, elements, the arrangement and connection of the elements, steps, the processing order of the steps etc. illustrated in the following embodiments are mere examples, and are not intended to limit the present disclosure. Among the elements in the following embodiments, those not recited in any of the independent claims representing the most generic concepts are described as optional elements.

Note that the drawings are represented schematically and are not necessarily precise illustrations. In the drawings, the same reference signs are given to essentially the same elements, and redundant descriptions may be omitted or simplified.

In this Specification, numerical values and terms representing relationships between elements such as "the same", "perpendicular", and "vertical" do not express their strict meanings only, but also include a substantially equivalent range, for example a difference of several percentages.

In addition, in the following Specification, images are still images, for example, but may be moving images. Also, the images are color images, for example, but may be monochrome images.

### [Embodiment 1]

The present embodiment describes, as an aspect of the present disclosure, an axle number measurement device and the like that measure a total number of axles of grounded tires of a vehicle having a lifted-up axle, using a captured image obtained by an imaging device capturing a subject and a depth image obtained by another imaging device capturing the subject.

### [1-1. Configuration]

First, with reference to FIG. 1A through FIG. 2, the following describes a configuration of axle number measurement system 1 that includes axle number measurement device 30 according to the present embodiment. FIG. 1A is a schematic diagram illustrating a configuration of axle number measurement system 1 according to the present embodiment. FIG. 1B is a diagram illustrating an example of provision of an imaging device according to the present embodiment. FIG. 2 is a block diagram illustrating a functional configuration of axle number measurement system 1 according to the present embodiment.

As illustrated in FIG. 1A through FIG. 2, axle number measurement system 1 includes first imaging device 10, second imaging device 20, and axle number measurement device 30. Axle number measurement system 1 is an information processing system for measuring a total number of axles of grounded tires of vehicle 40 that travels on road 50.

First imaging device 10 and second imaging device 20 each capture vehicle 40 that travels on road 50, from a lateral side of vehicle 40. First imaging device 10 and second imaging device 20 are provided on, for example, road 50 (or the roadside) to capture the same region. First imaging device 10 and second imaging device 20 may each capture vehicle 40 at the same angle of view, for example. Further, first imaging device 10 and second imaging device 20 may be provided in proximity to each other, for example. In the present embodiment, first imaging device 10 and second imaging device 20 are provided adjacent to each other along road 50 on which vehicle 40 travels.

First imaging device 10 includes an image sensor, and captures one or more captured images including one or more tires of vehicle 40 that travels on road 50 (see captured image P1 illustrated in FIG. 4 which will be described later). The image sensor includes an imaging element, for example. For example, a solid-state image sensor such as a complementary metal oxide semiconductor (CMOS) image sensor and a charge coupled device (CCD) image sensor can be used as the imaging element. First imaging device 10 is implemented by, for example, a camera (a visible light camera, for example), but is not limited to this. Also, a captured image is a visible light image, for example.

Second imaging device 20 includes a distance sensor, and obtains one or more depth images including one or more tires of vehicle 40 that travels on road 50 (see depth image P2 illustrated in FIG. 5 which will be described later). The distance sensor includes a light-emitting element and a light-receiving element. That is to say, second imaging device 20 is an imaging device different from first imaging device 10. In the present embodiment, the distance sensor measures a time period from when the light-emitting element emits light to when the light-receiving element receives the light, and obtains a depth image by a time of flight (TOF) method in which a time difference is converted into a distance. However, the method for obtaining the depth image is not limited to this. With use of, for example, a position sensitive detector (PSD) as the light-receiving element, the distance sensor may obtain the depth image using a triangular distance measuring method in which a change in the image forming position of the light-receiving element caused by a change in distance is converted into a distance. Although second imaging device 20 is implemented by, for example, a depth image camera that employs the TOF method, second imaging device 20 is not limited to this.

Note that the depth image includes first distances between second imaging device 20 and one or more tires of vehicle 40, and second distances between second imaging device 20 and road 50. It can be said that the second distances are distances from second imaging device 20 to the road surface. Further, one or more tires of vehicle 40 captured by second imaging device 20 include one or more tires captured by first imaging device 10.

Note that first imaging device 10 and second imaging device 20 may each include a timer device that measures the current date and time, for example. The timer device is implemented by a real-time clock, for example.

As described above, information obtained by image capturing performed by first imaging device 10 and information obtained by image capturing performed by second imaging device 20 are different from one another.

Here, an example of provision of first imaging device 10 and second imaging device 20 is described with reference to FIG. 1B. FIG. 1B illustrates vehicle 40 viewed from the front side. Note that although only second imaging device 20 is illustrated in FIG. 1B, the same can be said for first imaging device 10.

As illustrated in FIG. 1B, second imaging device 20 is provided at predetermined angle θ with respect to road 50. Angle θ is, for example, an angle that allows obtainment of a depth image from which a total number of axles of grounded tires can be measured by axle number measurement device 30. Angle θ is, for example, an angle formed between road 50 and optical axis J of second imaging device 20 when viewed from the front of vehicle 40. Second imaging device 20 is fixed in an orientation that, for example, allows optical axis J to pass through a grounding position at which a grounded tire and road 50 are in contact or a position in the vicinity of the grounding position.

Angle θ is, for example, 60° or less, more preferably 45° or less, and further preferably 30° or less. Second imaging device 20 may be provided on road 50 (on the road surface) where angle θ becomes 0°, but from the viewpoint of inhibiting adhesion of objects such as sand and dust, second imaging device 20 is preferably provided at a height greater than or equal to a predetermined value from road 50. Thus, angle θ is, for example, preferably 5° or greater, more preferably 10° or greater, and further preferably 15° or greater. Note that the predetermined value may be, for example, 50 cm, more preferably 100 cm, and further preferably 150 cm.

Note that angle θ of first imaging device 10 and angle θ of second imaging device 20 may be different from one another.

As illustrated in FIG. 1A and FIG. 2, axle number measurement device 30 is an information processing device that determines whether a tire of vehicle 40 is grounded based on a captured image from first imaging device 10 and a depth image from second imaging device 20, measures a total number of axles of grounded tires, and outputs a measurement result.

As illustrated in FIG. 2, axle number measurement device 30 includes first communication unit 31, second communication unit 32, detector 33, and measurement unit 34. Axle number measurement device 30 is, for example, implemented by a computer (not illustrated) that includes a microprocessor (not illustrated) and memory (not illustrated) through execution, by the microprocessor, of a program stored in the memory.

First communication unit 31 is a communication circuit (in other words, a communication module) that allows axle number measurement device 30 to communicate with first imaging device 10. First communication unit 31 obtains a captured image from first imaging device 10, for example. First communication unit 31 is an example of the first obtaining unit.

Second communication unit 32 is a communication circuit (in other words, a communication module) that allows axle number measurement device 30 to communicate with second imaging device 20. Second communication unit 32 obtains a depth image from second imaging device 20, for example. Second communication unit 32 is an example of the second obtaining unit.

Each of first communication unit 31 and second communication unit 32 is, for example, a wireless communication circuit for performing wireless communication, but may be a wired communication circuit for performing wired communication. The communication standard for the communication performed by first communication unit 31 and second communication unit 32 is not particularly limited. First communication unit 31 and second communication unit 32 may be included in one communication circuit.

Detector 33 detects one or more tires from one or more captured images obtained from first imaging device 10. The method for the tire detection by detector 33 is not particularly limited, and a conventional technique may be used. Detector 33 may perform the tire detection by, for example, performing, in advance, machine learning related to tire recognition. That is to say, detector 33 may perform the tire detection using a trained model related to tire recognition. Detector 33 may perform the tire detection using, for example, a template matching method.

By detecting one or more tires, detector 33 can obtain information indicating the position of each of the one or more tires. The information indicating the position of a tire may be information indicating a position on the captured image (for example, a pixel position). The position of a tire may be the center position of the tire or may be a region in which the tire is present.

Detector 33 may further detect the wheel of each of the one or more tires detected. The method for the wheel detection by detector 33 is not particularly limited as with the method for the tire detection, and a conventional technique may be used.

For example, by detecting one or more wheels, detector 33 can obtain information indicating the position of each of the one or more wheels. The information indicating the position of a wheel may be information indicating a position on the captured image. The position of a wheel may be the center position of the wheel or may be a region in which the wheel is present.

Measurement unit 34 measures a total number of axles of vehicle 40 that support tires which are in contact with road 50 (grounded tires), based on position information indicating the position of each of one or more tires detected by detector 33 and the depth image from second imaging device 20. Measurement unit 34 determines whether a tire is in contact with road 50 based on the position information and the depth image, and measures a total number of axles of tires determined to be in contact with road 50. For example, measurement unit 34 determines whether a tire is in contact with road 50 based on the continuity between first distances to the position of the tire in the depth image and second distances to a position outside the tire in captured image P1, that is, road 50 below the tire, and measures a total number of axles of tires determined to be in contact with road 50. The first distances and the second distances are obtained from the depth image. For example, measurement unit 34 determines whether a tire is in contact with road 50 based on a change amount from the first distances to the second distances, and measures a total number of axles of tires determined to be in contact with road 50.

### [1-2. Operation]

Next, with reference to FIG. 3 through FIG. 7, the following describes operations performed by axle number measurement system 1 described above. FIG. 3 is a sequence diagram illustrating operations performed by axle number measurement system 1 according to the present embodiment.

As illustrated in FIG. 3, first imaging device 10 captures vehicle 40 (S11), and outputs a captured image obtained by the image capturing to axle number measurement device 30 (S12). Second imaging device 20 captures vehicle 40 (S21), and outputs a depth image obtained by the image capturing to axle number measurement device 30 (S22). In step S21, the light-emitting element of second imaging device 20 emits pulsed light, and the light-receiving element of second imaging device 20 receives reflected light that is a portion of the pulsed light which has been reflected by an object. A calculator of second imaging device 20 performs a calculation to convert a time difference between the emission of the pulsed light and the reception of the reflected light into a distance. By doing so, a depth image is obtained.

The region captured in step S11 and the region captured in step S21 are regions including one or more tires of vehicle 40, and may be, for example, the same region. The region captured in step S11 and the region captured in step S21 may each be broken-line region IV illustrated in FIG. 1A.

Note that the captured image output in step S12 and the depth image output in step S22 may be images captured at the same time. The images captured at the same time may be images obtained by performing capturing operations at the same timing through synchronization of capturing timings of first imaging device 10 and second imaging device 20. Further, the images captured at the same time may be images obtained by extracting images captured at the same time by first imaging device 10 and second imaging device 20 that constantly perform image capturing.

Next, axle number measurement device 30 obtains the captured image from first imaging device 10 and obtains the depth image from second imaging device 20 (S31). Specifically, first communication unit 31 of axle number measurement device 30 obtains the captured image from first imaging device 10, and second communication unit 32 of axle number measurement device 30 obtains the depth image from second imaging device 20. The timing of obtaining the captured image and the timing of obtaining the depth image may be the same, or may be different. Step S31 is an example of the first obtaining and the second obtaining.

Here, the captured image and the depth image are described with reference to FIG. 4 and FIG. 5. FIG. 4 is a diagram illustrating an example of captured image P1 according to the present embodiment. FIG. 5 is a diagram illustrating an example of depth image P2 according to the present embodiment. Note that each of FIG. 4 and FIG. 5 illustrates an image obtained by capturing broken-line region IV illustrated in FIG. 1A. In FIG. 5, distances from second imaging device 20 are represented by gray scale; a shorter distance is represented by a lighter shade, whereas a longer distance is represented by a darker shade.

As illustrated in FIG. 4 and FIG. 5, axle number measurement device 30 obtains captured image P1 and depth image P2 each including rear wheel tires 41 and 42 of rear axles of vehicle 40. Captured image P1 is an example of the first captured image. Depth image P2 is formed based on distances measured from a predetermined position. The predetermined position is, for example, the position at which second imaging device 20 is provided, but is not limited to this. The predetermined position may be, for example, the position at which first imaging device 10 is provided. In this case, distance correction is performed on the depth image captured by second imaging device 20, according to the difference between the positions of first imaging device 10 and second imaging device 20.

Note that in step S31, first communication unit 31 may obtain, from first imaging device 10, captured image P1 including front wheel tire 43 of a front axle of vehicle 40 and rear wheel tires 41 and 42 of rear axles of vehicle 40. Also, in step S31, second communication unit 32 may obtain, from second imaging device 20, depth image P2 including front wheel tire 43 of the front axle of vehicle 40 and rear wheel tires 41 and 42 of the rear axles of vehicle 40.

First communication unit 31 outputs captured image P1 obtained to detector 33. Second communication unit 32 outputs depth image P2 obtained to measurement unit 34.

With reference to FIG. 3 again, detector 33 detects one or more tires from captured image P1 obtained (S32). In the example illustrated in FIG. 4, detector 33 detects rear wheel tires 41 and 42. Detector 33 detects, for example, tire region R1 indicating the position of rear wheel tire 41 and tire region R2 indicating the position of rear wheel tire 42. Further, detector 33 may detect the position of the wheel of each of one or more tires from captured image P1 obtained. Rear wheel tires 41 and 42 are examples of one or more tires. Step S32 is an example of the detecting.

Note that the tire detection is possible even with captured image P1 captured in an environment where the influence of noise increases, such as at night. For example, since road 50 and an area in the vicinity of road 50 are illuminated by a light such as a road light, first imaging device 10 can capture captured image P1 having an image quality that enables the tire detection.

Detector 33 outputs position information indicating the position of each of the one or more tires detected to measurement unit 34. In the example illustrated in FIG. 4, detector 33 outputs information indicating tire regions R1 and R2 to measurement unit 34 as the position information.

Measurement unit 34 measures a total number of axles based on depth image P2 (S33). Specifically, based on the position information obtained from detector 33, measurement unit 34 identifies the position of each of one or more tires in depth image P2, determines, for each of the one or more tires identified, whether the tire is in contact with road 50, and measures a total number of axles of grounded tires based on the result of determination. Note that the method for determination as to whether a tire and road 50 are in contact will be described later. Step S33 is an example of the measuring.

Next, measurement unit 34 outputs the total number of axles measured in step S33 (S34). Measurement unit 34 may output the total number of axles to an external device. When axle number measurement device 30 includes a display unit such as a display, measurement unit 34 may display the total number of axles on the display unit. The total number of axles measured by measurement unit 34 is an example of the result of measurement.

Now, operations performed by axle number measurement device 30 are described with reference to FIG. 6. FIG. 6 is a flowchart illustrating operations performed by axle number measurement device 30 according to the present embodiment.

As illustrated in FIG. 6, axle number measurement device 30 obtains captured image P1 and depth image P2 (S101). Captured image P1 is output to detector 33. Depth image P2 is output to measurement unit 34. Step S101 corresponds to step S31 in FIG. 3.

Next, detector 33 detects one or more tires from captured image P1 (S102). For example, detector 33 identifies the position of each of one or more tires from captured image P1. Detector 33 outputs position information indicating the position of each of the one or more tires detected to measurement unit 34. Step S102 corresponds to step S32 in FIG. 3.

Next, measurement unit 34 identifies the position of each of one or more tires in depth image P2 based on the position information obtained from detector 33 (S103). In the present embodiment, captured image P1 and depth image P2 are images obtained by capturing the same region (for example, broken-line region IV). Thus, the position of a tire in captured image P1 and the position of the tire in depth image P2 are the same. Therefore, as illustrated in FIG. 5, measurement unit 34, for example, superimposes tire regions R1 and R2 included in the position information on depth image P2.

In such a manner, measurement unit 34 identifies the position of each of one or more tires in depth image P2 based on the position information obtained from detector 33. In the present embodiment, captured image P1 is used for identifying the position of each of one or more tires in depth image P2. In other words, in the present embodiment, captured image P1 is not used for determining whether a tire is in contact with road 50.

Note that measurement unit 34 may perform predetermined correction on the position information and identify the position of each of one or more tires in depth image P2 based on the corrected position information. The predetermined correction includes, for example, correction of at least one of the position and the size of tire region R1 in captured image P1. For example, measurement unit 34 may convert tire regions R1 and R2 detected from captured image P1 to regions corresponding to tire regions R1 and R2 according to the difference between provision states of first imaging device 10 and second imaging device 20, and superimpose the regions obtained by the conversion on depth image P2. The provision states include the positions at which first imaging device 10 and second imaging device 20 are provided, the direction of optical axis J, and the like.

Next, based on depth image P2 in which the position of each of one or more tires has been identified, measurement unit 34 determines, for each of the one or more tires, whether the tire is in contact with road 50 (S104). In other words, measurement unit 34 measures a total number of axles of tires of vehicle 40 that are in contact with road 50 based on the continuity of distance values from the tire to road 50 in depth image P2. Specifically, measurement unit 34 measures a total number of axles of tires of vehicle 40 that are in contact with road 50 based on the continuity between first distances from second imaging device 20 to the tire in depth image P2 and second distances from second imaging device 20 to a position outside the tire in captured image P1, that is, road 50 below the tire.

Measurement unit 34, for example, measures a total number of axles that support tires in contact with road 50, based on the continuity between the first distances and the second distances arranged from the position of a tire to the position outside the tire.

Measurement unit 34, for example, determines whether a tire of vehicle 40 is in contact with road 50 based on the continuity of distances from the tire to second imaging device 20 on road 50, on a straight line passing through the center of the tire and extending downward in the vertical direction when vehicle 40 is viewed from a lateral side, and measures a total number of axles of tires of vehicle 40 that are in contact with road 50. The center of a tire may be, for example, the center of the wheel.

For example, as for rear wheel tire 41, measurement unit 34 determines whether rear wheel tire 41 is in contact with road 50 based on the continuity of distances in measurement region R3. Measurement region R3 includes, for example, part of rear wheel tire 41 and a region below tire region R1. For example, measurement region R3 is a region including the center of rear wheel tire 41 and road 50 below the center of rear wheel tire 41.

Also, for example, as for rear wheel tire 42, measurement unit 34 determines whether rear wheel tire 42 is in contact with road 50 based on the continuity of distances in measurement region R4. Measurement region R4 includes, for example, part of rear wheel tire 42 and a region below tire region R2. For example, measurement region R4 is a region including the center of rear wheel tire 42 and road 50 below the center of rear wheel tire 42.

For each of measurement regions R3 and R4, measurement unit 34 determines whether there is a continuity of distances from the tire to road 50. FIG. 7 is a diagram for describing determination as to whether a tire and road 50 are in contact according to the present embodiment. Part (a) of FIG. 7 is a diagram for describing determination on the continuity of distances in measurement region R3. That is to say, part (a) of FIG. 7 illustrates a result of measurement of distances used for determining whether rear wheel tire 41 is in contact with road 50. Part (b) of FIG. 7 is a diagram for describing determination on the continuity of distances in measurement region R4. That is to say, part (b) of FIG. 7 illustrates a result of measurement of distances used for determining whether rear wheel tire 42 is in contact with road 50.

Note that part (a) and part (b) of FIG. 7 are measurement results obtained by measuring the distances between the wheel and second imaging device 20 on road 50, but it is sufficient so long as the measurement results include at least measurement results obtained by measuring the distances between the tire and second imaging device 20 and the distances between road 50 at a position in a region directly below the tire and second imaging device 20. Note that the traveling direction of vehicle 40 is the direction perpendicular to the paper surface of FIG. 7. The distances in part (a) and part (b) of FIG. 7 are distances measured when vehicle 40 is viewed from a lateral side. "Distance: small" means that the distance to second imaging device 20 is short.

As illustrated in part (a) of FIG. 7, the distances are not continuous at the boundary between rear wheel tire 41 and road 50. Specifically, the distances are not continuous in the two-dot chain line region illustrated in part (a) of FIG. 7. There is distance change amount d1 between the lowest point of rear wheel tire 41 and the position directly below rear wheel tire 41 on depth image P2. This is because rear wheel tire 41 is not touching road 50, and in depth image P2, the position directly below rear wheel tire 41 is road 50 located farther than rear wheel tire 41. The broken line representing the boundary between the tire and road 50 in part (a) of FIG. 7 shows the position of a broken line on the lower side (road 50 side) among broken lines constituting tire region R1 in FIG. 5 and extending in the traveling direction of vehicle 40. The position directly below rear wheel tire 41 is an example of a position adjacent to the tire in the direction toward road 50. In the present embodiment, the position directly below rear wheel tire 41 is, for example, road 50.

Further, the position directly below rear wheel tire 41 in depth image P2 may be the position of a pixel (hereinafter, also referred to as a directly below pixel) located a predetermined number of pixels below a pixel corresponding to the lowest point of rear wheel tire 41 (hereinafter, also referred to as the lowest point pixel). The predetermined number of pixels may be any value so long as the value makes it possible to determine that the tire is lifted by the lift axle mechanism to such an extent that the tire does not come into contact with road 50. The predetermined number of pixels may be 1, for example. That is to say, the directly below pixel may be a pixel adjacent to the lowest point pixel. Further, the predetermined number of pixels may be, for example, the number of pixels corresponding to a predetermined distance (for example, several centimeters) obtained by real space conversion, from the lowest point pixel.

For example, when change amount d1 is greater than a predetermined amount, measurement unit 34 determines that rear wheel tire 41 is not in contact with road 50. That is to say, measurement unit 34 determines that rear wheel tire 41 is lifted up.

The predetermined amount may be any value so long as it makes it possible to determine whether rear wheel tire 41 is in contact. For example, the predetermined amount is appropriately determined using angle θ or the like of second imaging device 20. The predetermined amount is favorably greater than, for example, dent amount d2, which is the difference between the first distances to rear wheel tire 41 and third distances to the wheel. The predetermined amount is favorably greater than dent amount d2 and less than change amount d1, for example.

This can reduce erroneous determination when measurement unit 34 determines whether rear wheel tire 41 is in contact with road 50. For example, it is possible to inhibit measurement unit 34 from erroneously determining, when change amount d1 is less than the predetermined amount and the predetermined amount is less than dent amount d2, that rear wheel tire 41 is not in contact with road 50 because dent amount d2 is greater than the predetermined value.

As illustrated in part (b) of FIG. 7, the distances gradually change at the boundary between rear wheel tire 42 and road 50. That is to say, the distances are continuous at the boundary between rear wheel tire 42 and road 50. For example, the lowest point of rear wheel tire 42 and the position directly below rear wheel tire 42 on depth image P2 are at the same distance. This is because rear wheel tire 42 is in contact with road 50, and in depth image P2, road 50 directly below rear wheel tire 42 is at the same distance as rear wheel tire 42. The broken line representing the boundary between the tire and road 50 in part (b) of FIG. 7 shows the position of a broken line on the lower side (road 50 side) among broken lines constituting tire region R2 in FIG. 5 and extending in the traveling direction of vehicle 40. The position directly below rear wheel tire 42 is an example of a position adjacent to the tire in the direction toward the road. In the present embodiment, the position directly below rear wheel tire 42 is, for example, road 50.

For example, when the distances are continuous between rear wheel tire 42 and road 50, measurement unit 34 determines that rear wheel tire 42 is in contact with road 50. That is to say, measurement unit 34 determines that rear wheel tire 42 is not lifted up. Moreover, measurement unit 34 may determine that rear wheel tire 42 is in contact with road 50 when change amount d1 illustrated in part (a) of FIG. 7 is less than or equal to the predetermined amount.

In such a manner, measurement unit 34 determines the continuity of the distances based on change amount d1 from the first distances to the second distances regarding the tire. That is to say, measurement unit 34 determines whether the distances are continuous based on change amount d1 from the first distances to the second distances regarding the tire.

With reference to FIG. 6 again, when, for example, as illustrated in part (b) of FIG. 7, the first distance to the lowest point of rear wheel tire 42 is the same as the second distance to the position outside tire region R2 and adjacent to the lowest point, or when the change amount between the first distance and the second distance is less than or equal to the predetermined amount, measurement unit 34 determines that rear wheel tire 42 is in contact with road 50 (Yes in S104), and the axle of rear wheel tire 42 is counted among the axles of grounded tires (S105). For example, in the case of "Yes" in step S104, measurement unit 34 adds 1 to the total number of axles of grounded tires.

When, for example, as illustrated in part (a) of FIG. 7, change amount d1 between the first distance to the lowest point of rear wheel tire 41 and the second distance to the position outside tire region R1 and adjacent to the lowest point is greater than the predetermined amount, measurement unit 34 determines that the tire is not in contact with road 50 (No in S104), and the process proceeds to step S106. That is to say, measurement unit 34 determines that the tire is not in contact with road 50 when the second distances are greater than the first distances by an amount greater than a predetermined amount at the time of change from the first distances to the second distances in depth image P2.

Note that measurement unit 34 is not limited to performing the above determination using the first distance to the lowest point of the tire. It is sufficient so long as measurement unit 34 performs the above determination using the first distance to the tire. For example, the first distance may be the distance to the outer circumference of the tire, or may be the distance to a position located inside the outer circumference of the tire by a predetermined distance. In this case, measurement unit 34 determines that rear wheel tire 41 is in contact with road 50 (Yes in S104) when change amount d1 between the first distance to a position other than the lowest point of the tire and the second distance to a position outside rear wheel tire 41 and adjacent to the lowest point of rear wheel tire 41 is less than or equal to a predetermined amount. This determination is also included in the determination as to whether a tire is in contact with road 50 based on the continuity of the first distance and the second distance.

Next, when the process of step S105 is performed or when "No" is determined in step S104, measurement unit 34 checks whether the determination has been performed for all the tires (S106). Measurement unit 34 determines whether the determination in step S104 has been performed for, for example, each of one or more tires detected in step S102.

When the determination has been performed for all the tires (Yes in S106), measurement unit 34 outputs a total number of axles (S107) and finishes the process. When the determination has not been performed for all the tires (No in S106), measurement unit 34 returns to step S104 and performs the processes of step S104 and thereafter for the remaining tire(s).

Note that steps S103 to S106 correspond to step S33 in FIG. 3. Also, step S107 corresponds to step S34 in FIG. 3.

Next, when determining "Yes" in step S106, measurement unit 34 outputs the total number of axles counted in step S105 (S107). Step S107 corresponds to step S34 in FIG. 3.

As described above, axle number measurement device 30 according to the present embodiment includes: an obtaining unit (for example, first communication unit 31 and second communication unit 32) that obtains captured image P1 and depth image P2; detector 33 that detects one or more tires based on captured image P1 to identify the position of each of one or more tires in depth image P2; and measurement unit 34 that measures a total number of axles of grounded tires based on the continuity between the first distances and the second distances in depth image P2. At the boundary (the point of contact) between a grounded tire and road 50, the distances are continuous on depth image P2, whereas between a lifted tire and road 50, the distances are not continuous on depth image P2. Based on this fact, measurement unit 34 determines whether tires and road 50 are in contact, and measures a total number of axles of grounded tires based on the continuity of the distances.

As described above, in an environment where noise in captured image P1 increases, such as at night, axle number measurement device 30 performs the above measurement using depth image P2 having less noise. By doing so, axle number measurement device 30 can accurately measure a total number of axles of grounded tires even in an environment where noise in captured image P1 increases, such as at night.

### [Variation of Embodiment 1]

The present variation describes, as an aspect of the present disclosure, an axle number measurement device and the like that measure a total number of axles from captured image P1 when a predetermined condition is satisfied.

First, with reference to FIG. 8, the following describes a configuration of axle number measurement system 1a that includes axle number measurement device 30a according to the present variation. FIG. 8 is a block diagram illustrating a functional configuration of axle number measurement system 1a according to the present variation. Note that the same elements as those in axle number measurement system 1 according to Embodiment 1 are given the same reference signs as those in Embodiment 1, and the description thereof will be omitted or simplified.

As illustrated in FIG. 8, axle number measurement system 1a includes first imaging device 10, second imaging device 20, and axle number measurement device 30a. Axle number measurement device 30a includes determination unit 35 in addition to the elements of axle number measurement device 30 according to Embodiment 1.

In the present variation, first imaging device 10 outputs exposure time information indicating an exposure time to axle number measurement device 30a. The timing at which first imaging device 10 outputs the exposure time information to axle number measurement device 30a is not particularly limited. For example, first imaging device 10 may output, to axle number measurement device 30a, captured image P1 including the exposure time information indicating the exposure time of captured image P1. Also, first imaging device 10 may output the exposure time information to axle number measurement device 30a at predetermined time intervals, for example. Further, first imaging device 10 may output the exposure time information indicating an exposure time of image capturing to axle number measurement device 30a before first imaging device 10 starts the image capturing. Moreover, for example, if first imaging device 10 obtains information indicating that vehicle 40 will travel in front of second imaging device 20, first imaging device 10 may output the exposure time information to axle number measurement device 30a before vehicle 40 travels in front of second imaging device 20.

First communication unit 31 is a communication circuit (in other words, a communication module) that allows axle number measurement device 30a to communicate with first imaging device 10. First communication unit 31, for example, obtains captured image P1 and the exposure time information from first imaging device 10. First communication unit 31 is an example of the first obtaining unit.

Determination unit 35 determines whether captured image P1 obtained from first imaging device 10 is an image captured in an environment having a brightness higher than or equal to a predetermined level. In the present embodiment, determination unit 35 determines whether captured image P1 is an image captured in an environment having a brightness higher than or equal to a predetermined level based on the exposure time of captured image P1 captured by first imaging device 10. For example, when the exposure time of captured image P1 is less than or equal to a predetermined period, determination unit 35 determines that captured image P1 is an image captured in an environment having a brightness greater than equal to a predetermined level. The predetermined period is such a length of time that noise caused by external light in the image capturing performed by second imaging device 20 does not affect the grounded tire detection.

The environment having a brightness higher than or equal to a predetermined level is, for example, an environment in which external light such as sunlight irradiates road 50, and is, for instance, a daytime environment. The environment having a brightness higher than or equal to a predetermined level may be, for example, an environment in the imaging region of first imaging device 10 and second imaging device 20. It can be said that determination unit 35 determines whether the amount of external light that irradiates road 50 is greater than or equal to a predetermined value. Note that the imaging region is, for example, broken line region IV illustrated in FIG. 4 and FIG. 5.

In this case, external light could be reflected by road 50 and enter second imaging device 20. The external light entering second imaging device 20 becomes noise in depth image P2. That is to say, in an environment having a brightness higher than or equal to a predetermined level, it is difficult for second imaging device 20 to measure distances precisely.

Therefore, in the present variation, in addition to the processes in Embodiment 1, measurement unit 34 measures a total number of axles of grounded tires using, out of captured image P1 and depth image P2, only captured image P1 when determination unit 35 determines that captured image P1 is an image captured in an environment having a brightness higher than or equal to a predetermined level. Note that the external light is light other than the light emitted by second imaging device 20, and is, for example, sunlight or illumination light.

Now, operations performed by axle number measurement device 30a are described with reference to FIG. 9. FIG. 9 is a flowchart illustrating operations performed by axle number measurement device 30a according to the present variation. Note that the same operations as those in Embodiment 1 are given the same reference signs as those in Embodiment 1, and the description thereof will be omitted or simplified. The following describes the case where first imaging device 10 outputs the exposure time information indicating an exposure time of image capturing to axle number measurement device 30a before first imaging device 10 starts the image capturing.

As illustrated in FIG. 9, first communication unit 31 of axle number measurement device 30a obtains the exposure time information in captured image P1 from first imaging device 10 (S201). First communication unit 31 may periodically obtain the exposure time information. When it is detected in advance that vehicle 40 will pass, first communication unit 31 may obtain the exposure time information before vehicle 40 enters the imaging region of second imaging device 20. First communication unit 31 outputs the exposure time information to determination unit 35.

Next, determination unit 35 determines whether the exposure time indicated by the exposure time information is less than or equal to a predetermined period (S202). Determining whether the exposure time indicated by the exposure time information is less than or equal to a predetermined period is an example of determining whether captured image P1 is an image captured in an environment having a brightness higher than or equal to a predetermined level. For example, determination unit 35 determines whether the amount of external light in the in the vicinity of road 50 is greater than or equal to a predetermined value.

When the exposure time indicated by the exposure time information is less than or equal to the predetermined period, determination unit 35 determines that captured image P1 is an image to be captured in an environment having a brightness higher than or equal to a predetermined level (Yes in S202), and the process proceeds to step S203. When the exposure time indicated by the exposure time information is greater than the predetermined period, determination unit 35 determines that captured image P1 is not an image to be captured in an environment having a brightness higher than or equal to a predetermined level (No in S202), and the process proceeds to S101. Note that the processes of step S101 and thereafter are the same as those in FIG. 6 according to Embodiment 1, and the description thereof will be omitted.

Note that, in the above description, determination unit 35 determines, based on the exposure time information, whether captured image P1 is an image to be captured in an environment having a brightness higher than or equal to a predetermined level, but the present disclosure is not limited to this. Determination unit 35 may perform the determination in step S202 based on, for example, captured image P1 obtained from first imaging device 10. Determination unit 35 may perform the determination in step S202 based on, for example, the pixel value of each pixel included in captured image P1. For example, when a value obtained based on the pixel value of each pixel is greater than or equal to a predetermined value, determination unit 35 may determine that captured image P1 is an image captured in an environment having a brightness higher than or equal to a predetermined level. In this case, first imaging device 10 outputs captured image P1 to axle number measurement device 30a. Subsequently, first communication unit 31 outputs captured image P1 obtained to both measurement unit 34 and determination unit 35. The value obtained based on the pixel value of each pixel may be, for example: any one of the maximum value, the minimum value, the average value, the median value, the mode value, etc. of the pixel values of the pixels; a pixel value of one or more given pixels determined in advance; or a value obtained by performing a predetermined calculation on the pixel values. Captured image P1 used for the determination in step S202 may be, for example, captured image P1 last obtained from first imaging device 10.

Determination unit 35 may, for example, obtain the illuminance in the vicinity of road 50 (for example, the illuminance in the imaging region of second imaging device 20) from an external illuminance sensor, and perform the determination in step S202 based on the illuminance obtained. Moreover, determination unit 35 may, for example, obtain weather information on the area in which second imaging device 20 is provided from a weather information server that manages weather information, and perform the determination in step S202 based on the weather information obtained. The weather information includes, for example, temperature, rainfall, cloud cover, amount of solar radiation, and weather. Determination unit 35 may, for example, determine that captured image P1 is an image to be captured in an environment having a brightness higher than or equal to a predetermined level when, for instance, the amount of solar radiation is greater than or equal to a predetermined value or the weather is sunny. Note that the illuminance and the weather information are obtained via, for example, at least one of first communication unit 31 and second communication unit 32. Moreover, determination unit 35 may obtain the current time and perform the determination in step S202 based on the current time obtained. For example, when the current time indicates daytime, determination unit 35 may determine that captured image P1 is an image to be captured in an environment having a brightness higher than or equal to a predetermined level.

Note that when determination unit 35 determines "Yes" in step S202, determination unit 35 may output, to second imaging device 20 via second communication unit 32, stop information indicating that the image capturing performed by second imaging device 20 is to be stopped. With this, second imaging device 20 stops the image capturing operation, thereby reducing the power consumption of second imaging device 20. Also, when determination unit 35 determines "Yes" in step S202, determination unit 35 may output, to measurement unit 34, measurement control information indicating that a total number of axles of grounded tires is to be measured based on captured image P1. With this, when it is determined "Yes" in step S202 and measurement unit 34 obtains depth image P2, it is possible to prohibit measurement unit 34 from measuring a total number of axles of grounded tires using depth image P2 obtained.

When determination unit 35 determines "Yes" in step S202, first communication unit 31 obtains captured image P1 from first imaging device 10 (S203). First communication unit 31 outputs captured image P1 obtained to detector 33.

Next, detector 33 detects one or more tires from captured image P1 (S204). For example, when captured image P1 is an image captured in an environment having a brightness higher than or equal to a predetermined level, detector 33 further determines, for each of one or more tires, whether the tire is in contact with road 50 from captured image P1. Note that the process of step S204 is the same as that of step S102, and thus the description thereof will be omitted.

Next, based on captured image P1 from which the position of each of one or more tires is identified, measurement unit 34 determines, for each of the one or more tires, whether the tire is in contact with road 50 (S205). That is to say, measurement unit 34 determines whether the tire is in contact with road 50 based on captured image P1. The method for determining whether the tire is in contact with road 50 based on captured image P1 is not particularly limited, and a conventional technique may be used. Measurement unit 34, for example, calculates a reference line extending in the traveling direction of vehicle 40 from the lowest point of rear wheel tire 42. Subsequently, for a tire (for example, rear wheel tire 41) other than front wheel tire 43 and rear wheel tire 42, for example, measurement unit 34 determines whether the tire is in contact with road 50 based on whether the lowest point of the tire is away from the reference line by a predetermined value or more in a direction toward the upper side of vehicle 40. Note that measurement unit 34 may, for example, calculate a straight line connecting the lowest point of front wheel tire 43 and the lowest point of rear wheel tire 42 as the reference line.

Here, the above predetermined value may be any value, so long as it is a value indicating that the tire other than front wheel tire 43 and rear wheel tire 42 is lifted by the lift axle mechanism to an extent that the tire does not come into contact with road 50. The predetermined value may be, for example, a predetermined number of pixels in captured image P1 (for example, 1000 pixels), or the number of pixels in captured image P1 corresponding to a predetermined distance (for example, 10 cm) obtained by real space conversion.

Moreover, measurement unit 34 may determine whether a tire is in contact with road 50 based on whether the tire is rotating. For example, measurement unit 34 may determine whether a tire is rotating based on two or more captured images P1 captured continuously, and determine that the tire is in contact with road 50 when the tire is rotating.

When measurement unit 34 determines that the tire is in contact with road 50 (Yes in S205), measurement unit 34 counts the axle of the tire among axles of grounded tires (S206). That is to say, when captured image P1 is an image captured in an environment having a brightness higher than or equal to a predetermined level, measurement unit 34 measures a total number of axles based on the result of determination by detector 33. For example, in the case of "Yes" in step S205, measurement unit 34 adds 1 to the total number of axles of grounded tires. When it is determined that the tire is not in contact with road 50 (No in S205), measurement unit 34 proceeds to step S207.

Next, when the process of step S206 is performed or when it is determined "No" in step S205, measurement unit 34 checks whether the determination has been performed for all the tires (S207). Measurement unit 34 determines, for example, whether the process of step S205 has been performed for each of one or more tires detected in step S204.

Next, when the determination has been performed for all the tires (Yes in S207), measurement unit 34 outputs a total number of axles (S107) and finishes the process. When the determination has not been performed for all the tires (No in S207), measurement unit 34 returns to step S205 and performs the process of step S205 for the remaining tire(s).

As described above, axle number measurement device 30a according to the present variation includes determination unit 35 that determines whether captured image P1 is an image captured in an environment having a brightness higher than or equal to a predetermined level. Measurement unit 34 changes the axle number measurement method according to the result of determination by determination unit 35. When determination unit 35 determines that captured image P1 is an image captured in an environment having a brightness higher than or equal to a predetermined level (corresponding to "Yes" in S202), measurement unit 34 measures a total number of axles of grounded tires based on captured image P1 (S203 through S207). When determination unit 35 determines that captured image P1 is not an image captured in an environment having a brightness higher than or equal to a predetermined level (corresponding to "No" in S202), measurement unit 34 measures a total number of axles of grounded tires based on depth image P2 (S101 through S107).

As described above, in the case of an environment where noise in depth image P2 increases, such as in the daytime, axle number measurement device 30a performs the above measurement using captured image P1 having less noise. By doing so, axle number measurement device 30a can accurately measure a total number of axles of grounded tires even in an environment where noise in depth image P2 increases, such as in the daytime.

The above description has illustrated the example of performing the process of counting a total number of axles based on a captured image and a depth image when it is determined "No" in step S202, but the present disclosure is not limited to this example. For example, axle number measurement device 30a need not perform the process of counting a total number of axles when it is determined "No" in step S202. In other words, axle number measurement device 30a may perform the process of counting a total number of axles using a captured image at least when it is determined "Yes" in step S202.

In such a manner, axle number measurement device 30a may determine whether the captured image is an image captured in an environment having a brightness higher than or equal to a predetermined level, and measure a total number of axles using the captured image when the captured image is an image captured in an environment having a brightness higher than or equal to a predetermined level. In this case, the depth image is not used for the measurement of a total number of axles.

### [Embodiment 2]

The present embodiment describes, as an aspect of the present disclosure, an axle number measurement device and the like that measure a total number of axles of grounded tires of a vehicle having a lifted-up axle, using two captured images captured by a first imaging device and a second imaging device both of which have an image sensor.

### [2-1. Configuration]

First, with reference to FIG. 10, the following describes a configuration of axle number measurement system 100 that includes axle number measurement device 130 according to the present embodiment. FIG. 10 is a block diagram illustrating a functional configuration of axle number measurement system 100 according to the present embodiment. Note that the same elements as those in axle number measurement system 1 according to Embodiment 1 are given the same reference signs as those in Embodiment 1, and the description thereof will be omitted or simplified.

As illustrated in FIG. 10, axle number measurement system 100 includes first imaging device 10, second imaging device 120, and axle number measurement device 130.

The configuration of second imaging device 120 is, for example, the same as that of first imaging device 10. Specifically, second imaging device 120 includes an image sensor, and captures one or more captured images including one or more tires of vehicle 40 that travels on road 50. The image sensor includes an imaging element, for example. For example, a solid-state image sensor such as a CMOS image sensor and a CCD image sensor can be used as the imaging element. Second imaging device 120 is implemented by, for example, a camera (a visible light camera, for example), but is not limited to this.

First imaging device 10 and second imaging device 120 may be implemented as one device. For example, first imaging device 10 and second imaging device 120 may constitute a stereo camera. First imaging device 10 and second imaging device 120 perform synchronous image capturing, for example.

The positions at which first imaging device 10 and second imaging device 120 are provided and the direction of optical axis J, for example, are fixed in advance.

Axle number measurement device 130 includes generator 136 in addition to the elements of axle number measurement device 30 according to Embodiment 1.

Generator 136 obtains captured image P1 from first imaging device 10 via first communication unit 31, and obtains a captured image (not illustrated) from second imaging device 120 via second communication unit 32. The captured image obtained from second imaging device 120 is an example of the second captured image, and is hereinafter also referred to as the second captured image.

Subsequently, generator 136 generates a depth image from captured image P1 and the second captured image. Although the method by which generator 136 generates the depth image is not particularly limited, the depth image is generated by calculating a distance to the subject using parallax information obtained by comparing captured images captured by two imaging devices disposed apart from each other. Generator 136 is an example of the second obtaining unit that obtains the depth image by generating the depth image from captured image P1 and the second captured image.

Note that generator 136 is not limited to generating the depth image from two captured images, and may generate the depth image from, for example, three or more captured images simultaneously captured.

Note that the above description has illustrated the example of axle number measurement system 100 in which captured image P1 used for detecting one or more tires is used also for generating depth image P2, but the present disclosure is not limited to this example. Axle number measurement system 100 may include, for example, three or more imaging devices. Axle number measurement system 100 may include, for example, first imaging device 10, second imaging device 120, and a third imaging device (not illustrated). Axle number measurement system 100 may, for example, detect one or more tires based on a captured image obtained by first imaging device 10 performing image capturing, and generate a depth image from two captured images obtained by second imaging device 120 and the third imaging device performing image capturing.

### [2-2. Operation]

Now, operations performed by axle number measurement device 130 are described with reference to FIG. 11. FIG. 11 is a flowchart illustrating operations performed by axle number measurement device 130 according to the present embodiment. Note that the same operations as those in Embodiment 1 are given the same reference signs as those in Embodiment 1, and the description thereof will be omitted or simplified.

As illustrated in FIG. 11, axle number measurement device 130 obtains a first captured image (for example, captured image P1) and a second captured image that have been simultaneously captured from different viewpoints (S301). Specifically, first communication unit 31 of axle number measurement device 130 obtains the first captured image from first imaging device 10, and second communication unit 32 of axle number measurement device 130 obtains the second captured image from second imaging device 120. The timing of obtaining the first captured image and the timing of obtaining the second captured image may be the same, or may be different.

First communication unit 31 outputs the obtained first captured image to detector 33 and generator 136. Second communication unit 32 outputs the obtained second captured image to generator 136.

Detector 33 detects one or more tires from the first captured image (S302). Detector 33 outputs position information indicating the position of each of one or more tires detected to measurement unit 34.

Generator 136 generates depth image P2 from the obtained first captured image and second captured image (S303). Step S303 is an example of the second obtaining.

Note that the processes of step S103 and thereafter are the same as those in Embodiment 1, and the description thereof will be omitted.

As described above, axle number measurement device 130 according to the present embodiment includes generator 136 that generates a depth image from two or more captured images.

In the above manner, axle number measurement device 130 can measure a total number of axles of grounded tires without having to obtain a depth image from outside. Thus, axle number measurement system 100 need not include a depth image sensor such as a TOF camera. Therefore, the configuration of axle number measurement system 100 can be simplified. In addition, the cost of axle number measurement system 100 can be reduced.

### [Other Embodiments]

Although an axle number measurement device, an axle number measurement system, and an axle number measurement method according to one or more aspects of the present disclosure have been described above based on Embodiment 1, a variation of Embodiment 1, and Embodiment 2 (hereinafter also referred to as embodiments etc.), the present disclosure is not limited to these embodiments etc.

For example, the above embodiments etc. have described the example where a total number of imaging devices included in the axle number measurement system is two, but three or more imaging devices may be included.

The above embodiments etc. have also described the example of measuring a total number of axles of rear wheel tires that are in contact with the road, but if two or more front wheel tires are detected, the total number of axles of front wheel tires that are in contact with the road is also measured in the same manner as for the rear wheel tires.

The above embodiments etc. have also described the example where the obtaining unit is a communication unit, but the present disclosure is not limited to this. The obtaining unit may be, for example, a connector to which a recording medium is connected. The connector may be, for example, a universal serial bus (USB) terminal to which a USB memory is connected, an SD card slot to which an SD card is inserted, an optical drive to which an optical disc is inserted, or the like.

Moreover, the processing orders of the steps in the flowcharts are examples given for specifically describing the present disclosure, and other processing orders may be adopted. Some of the steps may be performed simultaneously (in parallel) with other steps.

Moreover, the ways in which the functional blocks are divided in the block diagrams are mere examples. A plurality of functional blocks may be implemented as a single functional block, a single functional block may be divided into a plurality of functional blocks, and part of a function may be transferred to another functional block. Moreover, functions of a plurality of functional blocks having similar functions may be processed in parallel or by time-division by a single hardware or software product.

Moreover, the axle number measurement device according to the above embodiments etc. is implemented using a single device, but may be implemented using a plurality of devices connected to each other.

The above embodiments etc. have also described the example where the axle number measurement device does not include the first imaging device or the second imaging device, that is, the first imaging device and the second imaging device are separate from the axle number measurement device. The axle number measurement device, however, may include at least one of the first imaging device and the second imaging device. For example, the axle number measurement device may include both the first imaging device and the second imaging device. In such a case, the first imaging device functions as a first imaging unit forming part of the axle number measurement device, and the second imaging device functions as a second imaging unit forming part of the axle number measurement device. In such a manner, the axle number measurement system may be configured with a single device (for example, the axle number measurement device that includes the first imaging unit and the second imaging unit).

Moreover, the method for communication between the devices included in the axle number measurement system according to the above embodiments etc. is not particularly limited. The devices may perform wireless communication, or may perform wired communication. The devices may combine wireless communication and wired communication.

Part or all of the elements of the axle number measurement device according to the above embodiments etc. may be configured with one system large scale integration circuit (LSI). For example, the axle number measurement device may be configured with a system LSI including a detector, a measurement unit, a determination unit, and a generator.

A system LSI is a super-multifunction LSI manufactured with a plurality of processing units integrated on one chip, and is specifically a computer system including a microprocessor, read-only memory (ROM), and random access memory (RAM), for example. The ROM has a computer program stored therein. The system LSI achieves its function as a result of the microprocessor operating in accordance with the computer program.

LSI is described here, but it may also be referred to as an integrated circuit (IC), an LSI, a super LSI, or an ultra LSI depending on the degree of integration. Moreover, the method of circuit integration is not limited to LSI. Integration may be implemented with a specialized circuit or a general purpose processor. A field-programmable gate array (FPGA) for which programming can be performed after an LSI circuit is fabricated or a reconfigurable processor capable of reconfiguring connections and settings of circuit cells of an LSI circuit may also be used.

Furthermore, when advancement in semiconductor technology or a derivative of other technologies brings forth a circuit integration technology which replaces LSI, it will be appreciated that such a circuit integration technology may be used to integrate the functional blocks. Application and so on of biotechnology is one such possibility.

Furthermore, all or part of the various processes described above may be implemented using a hardware product such as an electric circuit, or may be implemented using a software product. Note that a process performed using a software product is implemented by a processor included in the axle number measurement device executing a program stored in memory.

Moreover, an aspect of the present disclosure may be a computer program that causes a computer to perform each characteristic step included in the axle number measurement method. Moreover, an aspect of the present disclosure may be a non-transitory computer-readable recording medium having such a program recorded thereon. For example, such a program may be recorded on a recording medium and distributed. For example, by installing the distributed program in a device that includes another processor and causing the processor to execute the program, it is possible to cause the device to perform each process described above.

### [Industrial Applicability]

The present disclosure is widely applicable to an axle number measurement device etc. that measure, for a vehicle, a total number of axles of tires that are in contact with the ground.

### [Reference Signs List]

1, 1a, 100 axle number measurement system
10 first imaging device
20, 120 second imaging device
30, 30a, 130 axle number measurement device
31 first communication unit (first obtaining unit)
32 second communication unit (second obtaining unit)
33 detector
34 measurement unit
35 determination unit
40 vehicle
41, 42 rear wheel tire
43 front wheel tire
50 road
136 generator (second obtaining unit)
d1 change amount
d2 dent amount
J optical axis
P1 captured image (first captured image)
P2 depth image
R1, R2 tire region
R3, R4 measurement region
θ angle

## Claims

1. An axle number measurement device (30, 30a, 130) that measures a total number of axles of a vehicle (40) that travels on a road, the axle number measurement device (30, 30a, 130) comprising:
a first obtaining unit (31) configured to obtain, from a first imaging device that includes an image sensor, a captured image (P1) that includes a tire of the vehicle (40);
a detector (33) configured to detect the tire from the captured image (P1);
a second obtaining unit (32) configured to obtain, from a second imaging device that includes a distance sensor, a depth image (P2) that includes the tire of the vehicle (40); and
a measurement unit (34) configured to measure a total number of axles that support tires which are in contact with the road, based on ion information indicating the position of the tire in the captured image and the depth image (P2),
wherein the measurement unit (34) is configured to: identify a position of the tire in the depth image (P2) obtained by the second imaging device, based on the position information indicating the position of the tire in the captured image (P1);
obtain first distances from a predetermined position to the tire identified and second distances from the predetermined position to a position outside the tire identified, the position outside the tire being the road below the tire; and measure the total number of axles that support tires which are in contact with the road, based on a continuity between the first distances and the second distances arranged from the position of the tire to the position outside the tire.

2. The axle number measurement device (30, 30a, 130) according to claim 1,
wherein the measurement unit (34) is configured to determine the continuity based on a change amount from the first distances to the second distances regarding the tire.

3. The axle number measurement device (30, 30a, 130) according to claim 1 or 2,
wherein the measurement unit (34) is configured to determine that the tire is not in contact with the road when the second distances are greater than the first distances by an amount greater than a predetermined amount at time of change from the first distances to the second distances.

4. The axle number measurement device (30, 30a, 130) according to any one of claims 1, 2, and 3,
wherein the distance sensor obtains the depth image (P2) by a time of flight (TOF) method, and
the depth image (P2) includes the first distances and the second distances measured by the TOF method.

5. The axle number measurement device (30, 30a, 130) according to any one of claims 1 to 4,
wherein the captured image (P1) and the depth image (P2) are images captured at a same time.

6. An axle number measurement device (30, 30a, 130) that measures a total number of axles of a vehicle (40) that travels on a road, the axle number measurement device (30, 30a, 130) comprising:
a first obtaining unit (31) configured to obtain, from a first ing device that includes an image sensor, a captured image (P1) that includes a tire of the vehicle (40);
a detector (33) configured to detect the tire from the captured image (P1);
a second obtaining unit (32) configured to obtain, from a nd imaging device that includes a distance sensor, a depth image (P2) that includes the tire of the vehicle (40);
a determination unit (35) configured to determine whether the captured image (P1) is an image captured in an environment having a brightness higher than or equal to a predetermined level; and
a measurement unit (34) configured to measure a total number of axles that support tires which are in contact with the road, based on a result of determination by the determination unit (35),
wherein, (i) when the determination unit (35) determines that the captured image (P1) is an image captured in an environment having a brightness higher than or equal to a predetermined level, the measurement unit (34) is configured to determine from the captured image (P1) whether the tire is in contact with the road, and measure the total number of axles that support tires which are in contact with the road, based on a result of determination on whether the tire is in contact with the road, and (ii) when the determination unit (35) determines that the captured image (P1) is not an image captured in an environment having a brightness higher than or equal to the predetermined level, the measurement unit (34) is configured to: identify a position of the tire in the depth image (P2) based on position information indicating the position of the tire in the captured image (P1);
obtain first distances from a predetermined position to the tire identified and second distances from the predetermined position to a position outside the tire identified, the position outside the tire being the road below the tire; and measure the total number of axles that support tires which are in contact with the road, based on a continuity between the first distances and the second distances arranged from the position of the tire to the position outside the tire.

7. An axle number measurement system comprising:
the axle number measurement device (30, 30a, 130) according to any one of claims 1 to 6;
a first imaging device that captures the captured image (P1); and
a second imaging device that performs image capturing to generate the depth image (P2).

8. An axle number measurement method of measuring a total number of axles of a vehicle (40) that travels on a road, the axle number measurement method comprising:
first obtaining of obtaining, from a first imaging device that includes an image sensor, a captured image (P1) that includes a tire of the vehicle (40);
detecting the tire from the captured image (P1);
second obtaining of obtaining, from a second imaging device that includes a distance sensor, a depth image (P2) that includes the tire of the vehicle (40); and
measuring a total number of axles that support tires which are in contact with the road, based on position information indicating the position of the tire in the captured image (P1) and the depth image (P2),
wherein the measuring includes: identifying a position of the tire in the depth image (P2) obtained by the second image device based on a result of detection the position information indicating the position he tire in the captured image (P1); obtaining first distances from a predetermined position to the tire identified and second distances from the predetermined position to a position outside the tire identified, the position outside the tire being the road below the tire; and measuring the total number of axles that support tires which are in contact with the road, based on a continuity between the first distances and the second distances arranged from the position of the tire to the position outside the tire.

9. The axle number measurement device (30, 30a, 130) according to claim 3,
wherein the detector (33) is further configured to detect a wheel inside the tire from the captured image (P1), and
the measurement unit (34) is configured to obtain third distances from the predetermined position to the wheel of the tire, and
the predetermined amount is greater than a difference between the first distances and the third distances.

10. The axle number measurement method according to claim 8,
wherein the detecting further includes detecting a wheel inside the tire from the captured image (P1), and
the measuring includes obtaining third distances from the predetermined position to the wheel of the tire, and determining that the tire is not in contact with the road when the second distances are greater than the first distances by a difference between the first distances and the third distances at time of change from the first distances to the second distances.

## Patentansprüche

1. Achszahlmessvorrichtung (30, 30a, 130), die eine Gesamtanzahl von Achsen eines Fahrzeugs (40) misst, das auf einer Straße fährt, wobei die Achszahlmessvorrichtung (30, 30a, 130) umfasst:
eine erste Erfassungseinheit (31), die dafür konfiguriert ist, von einer ersten Bildgebungsvorrichtung, die einen Bildsensor beinhaltet, ein aufgenommenes Bild (P1) zu erhalten, das einen Reifen des Fahrzeugs (40) enthält;
einen Detektor (33), der dafür konfiguriert ist, den Reifen aus dem aufgenommenen Bild (P1) zu erkennen;
eine zweite Erfassungseinheit (32), die dafür konfiguriert ist, von einer zweiten Bildgebungsvorrichtung, die einen Abstandssensor beinhaltet, ein Tiefenbild (P2) zu erhalten, das den Reifen des Fahrzeugs (40) enthält; und
eine Messeinheit (34), die dafür konfiguriert ist, eine Gesamtanzahl von Achsen zu messen, die Reifen tragen, die in Kontakt mit der Straße sind, auf der Grundlage von Positionsinformationen, die die Position des Reifens in dem aufgenommenen Bild und dem Tiefenbild (P2) angeben,
wobei die Messeinheit (34) konfiguriert ist zum:
Identifizieren einer Position des Reifens in dem Tiefenbild (P2), das von der zweiten Bildgebungsvorrichtung erhalten wird, auf der Grundlage der Positionsinformationen, die die Position des Reifens in dem aufgenommenen Bild (P1) angeben;
Erhalten erster Abstände von einer vorbestimmten Position zu dem identifizierten Reifen und zweiter Abstände von der vorbestimmten Position zu einer Position außerhalb des identifizierten Reifens, wobei die Position außerhalb des Reifens die Straße unter dem Reifen ist; und
Messen der Gesamtanzahl von Achsen, die Reifen tragen, die in Kontakt mit der Straße sind, auf der Grundlage einer Kontinuität zwischen den ersten Abständen und den zweiten Abständen, die von der Position des Reifens zu der Position außerhalb des Reifens angeordnet sind.

2. Achszahlmessvorrichtung (30, 30a, 130) nach Anspruch 1,
wobei die Messeinheit (34) dafür konfiguriert ist, die Kontinuität auf der Grundlage eines Änderungsbetrags von den ersten Abständen zu den zweiten Abständen in Bezug auf den Reifen zu bestimmen.

3. Achszahlmessvorrichtung (30, 30a, 130) nach Anspruch 1 oder 2,
wobei die Messeinheit (34) dafür konfiguriert ist, zum Zeitpunkt der Änderung von den ersten Abständen zu den zweiten Abständen zu bestimmen, dass der Reifen nicht in Kontakt mit der Straße ist, wenn die zweiten Abstände um einen Betrag größer als die ersten Abstände sind, der größer als ein vorbestimmter Betrag ist.

4. Achszahlmessvorrichtung (30, 30a, 130) nach einem der Ansprüche 1, 2 und 3,
wobei der Abstandssensor das Tiefenbild (P2) durch ein Time-of-Flight(TOF)-Verfahren erhält, und
wobei das Tiefenbild (P2) die ersten Abstände und die zweiten Abstände beinhaltet, die mit dem TOF-Verfahren gemessen wurden.

5. Achszahlmessvorrichtung (30, 30a, 130) nach einem der Ansprüche 1 bis 4,
wobei das aufgenommene Bild (P1) und das Tiefenbild (P2) gleichzeitig aufgenommene Bilder sind.

6. Achszahlmessvorrichtung (30, 30a, 130), die eine Gesamtanzahl von Achsen eines Fahrzeugs (40) misst, das auf einer Straße fährt,
wobei die Achszahlmessvorrichtung (30, 30a, 130) umfasst:
eine erste Erfassungseinheit (31), die dafür konfiguriert ist, von einer ersten Bildgebungsvorrichtung, die einen Bildsensor beinhaltet, ein aufgenommenes Bild (P1) zu erhalten, das einen Reifen des Fahrzeugs (40) enthält;
einen Detektor (33), der dafür konfiguriert ist, den Reifen aus dem aufgenommenen Bild (P1) zu erkennen;
eine zweite Erfassungseinheit (32), die dafür konfiguriert ist, von einer zweiten Bildgebungsvorrichtung, die einen Abstandssensor beinhaltet, ein Tiefenbild (P2) zu erhalten, das den Reifen des Fahrzeugs (40) enthält;
eine Bestimmungseinheit (35), die dafür konfiguriert ist, zu bestimmen, ob das aufgenommene Bild (P1) ein Bild ist, das in einer Umgebung aufgenommen wurde, die eine Helligkeit aufweist, die höher als oder gleich einem vorbestimmten Wert ist; und
eine Messeinheit (34), die dafür konfiguriert ist, auf der Grundlage eines Ergebnisses der Bestimmung durch die Bestimmungseinheit (35) eine Gesamtanzahl von Achsen zu messen, die Reifen tragen, die in Kontakt mit der Straße sind,
wobei
(i) wenn die Bestimmungseinheit (35) bestimmt, dass das aufgenommene Bild (P1) ein Bild ist, das in einer Umgebung aufgenommen wurde, die eine Helligkeit aufweist, die größer als oder gleich einem vorbestimmten Wert ist, die Messeinheit (34) dafür konfiguriert ist, auf der Grundlage eines Ergebnisses der Bestimmung, ob der Reifen in Kontakt mit der Straße ist, aus dem aufgenommenen Bild (P1) zu bestimmen, ob der Reifen in Kontakt mit der Straße ist, und die Gesamtanzahl der Achsen zu messen, die Reifen tragen, die in Kontakt mit der Straße sind, und
(ii) wenn die Bestimmungseinheit (35) bestimmt, dass das aufgenommene Bild (P1) kein Bild ist, das in einer Umgebung aufgenommen wurde, die eine Helligkeit aufweist, die größer als oder gleich dem vorbestimmten Wert ist, die Messeinheit (34) konfiguriert ist zum:
Identifizieren einer Position des Reifens in dem Tiefenbild (P2) auf der Grundlage der Positionsinformationen, die die Position des Reifens in dem aufgenommenen Bild (P1) angeben;
Erhalten erster Abstände von einer vorbestimmten Position zu dem identifizierten Reifen und zweiter Abstände von der vorbestimmten Position zu einer Position außerhalb des identifizierten Reifens, wobei die Position außerhalb des Reifens die Straße unter dem Reifen ist; und
Messen der Gesamtanzahl von Achsen, die Reifen tragen, die in Kontakt mit der Straße sind, auf der Grundlage einer Kontinuität zwischen den ersten Abständen und den zweiten Abständen, die von der Position des Reifens zu der Position außerhalb des Reifens angeordnet sind.

7. Achszahlmesssystem umfassend:
die Achszahlmessvorrichtung (30, 30a, 130) nach einem der Ansprüche 1 bis 6;
eine erste Bildgebungsvorrichtung, die das aufgenommene Bild (P1) aufnimmt; und
eine zweite Bildgebungsvorrichtung, die eine Bildaufnahme durchführt, um das Tiefenbild (P2) zu erzeugen.

8. Achszahlmessverfahren zum Messen einer Gesamtanzahl von Achsen eines Fahrzeugs (40), das auf einer Straße fährt, wobei das Achszahlmessverfahren umfasst:
erstes Erfassen, von einer ersten Bildgebungsvorrichtung, die einen Bildsensor beinhaltet, eines aufgenommenen Bildes (P1), das einen Reifen des Fahrzeugs (40) enthält;
Erkennen des Reifens aus dem aufgenommenen Bild (P1);
zweites Erfassen von einer zweiten Bildgebungsvorrichtung, die einen Abstandssensor beinhaltet, eines Tiefenbildes (P2), das den Reifen des Fahrzeugs (40) enthält; und
Messen einer Gesamtanzahl von Achsen, die Reifen tragen, die in Kontakt mit der Straße sind, auf der Grundlage von Positionsinformationen, die die Position des Reifens in dem aufgenommenen Bild (P1)und dem Tiefenbild (P2) angeben,
wobei das Messen Folgendes umfasst:
Identifizieren einer Position des Reifens in dem Tiefenbild (P2), das von der zweiten Bildgebungsvorrichtung erhalten wird, auf der Grundlage eines Ergebnisses des Erkennens der Positionsinformationen, die die Position des Reifens in dem aufgenommenen Bild (P1) angeben;
Erhalten erster Abstände von einer vorbestimmten Position zu dem identifizierten Reifen und zweiter Abstände von der vorbestimmten Position zu einer Position außerhalb des identifizierten Reifens, wobei die Position außerhalb des Reifens die Straße unter dem Reifen ist; und
Messen der Gesamtanzahl von Achsen, die Reifen tragen, die in Kontakt mit der Straße sind, auf der Grundlage einer Kontinuität zwischen den ersten Abständen und den zweiten Abständen, die von der Position des Reifens zu der Position außerhalb des Reifens angeordnet sind.

9. Achszahlmessvorrichtung (30, 30a, 130) nach Anspruch 3,
wobei der Detektor (33) weiter dafür konfiguriert ist, ein Rad in dem Reifen aus dem aufgenommenen Bild (P1) zu erkennen, und
wobei die Messeinheit (34) dafür konfiguriert ist, dritte Abstände ausgehend von der vorbestimmten Position zu dem Rad des Reifens zu erhalten, und
wobei der vorbestimmte Betrag größer als eine Differenz zwischen den ersten Abständen und den dritten Abständen ist.

10. Achszahlmessverfahren nach Anspruch 8,
wobei das Erkennen weiter das Erkennen eines Rades in dem Reifen aus dem aufgenommenen Bild (P1) umfasst und
wobei das Messen das Erhalten dritter Abstände von der vorbestimmten Position zu dem Rad des Reifens und das Bestimmen umfasst, dass der Reifen nicht in Kontakt mit der Straße ist, wenn die zweiten Abstände um eine Differenz zwischen den ersten Abständen und den dritten Abständen zum Zeitpunkt der Änderung von den ersten Abständen zu den zweiten Abständen größer als die ersten Abstände sind.

## Revendications

1. Dispositif de mesure de nombre d'essieux (30, 30a, 130) qui mesure un nombre total d'essieux d'un véhicule (40) qui se déplace sur une route, le dispositif de mesure de nombre d'essieux (30, 30a, 130) comprenant :
une première unité d'obtention (31) configurée pour obtenir, à partir d'un premier dispositif d'imagerie qui comporte un capteur d'images, une image capturée (P1) qui comporte un pneu du véhicule (40) ;
un détecteur (33) configuré pour détecter le pneu à partir de l'image capturée (P1) ;
une deuxième unité d'obtention (32) configurée pour obtenir, à partir d'un deuxième dispositif d'imagerie qui comporte un capteur de distance, une image de profondeur (P2) qui comporte le pneu du véhicule (40) ; et
une unité de mesure (34) configurée pour mesurer un nombre total d'essieux supportant des pneus qui sont en contact avec la route sur la base d'informations de position indiquant la position du pneu dans l'image capturée et l'image de profondeur (P2),
dans lequel l'unité de mesure (34) est configurée pour : identifier une position du pneu dans l'image de profondeur (P2) obtenue par le deuxième dispositif d'imagerie sur la base des informations de position indiquant la position du pneu dans l'image capturée (P1) ;
obtenir des premières distances entre une position prédéterminée et le pneu identifié, et des deuxièmes distances entre la position prédéterminée et une position extérieure au pneu identifié, la position extérieure au pneu étant la route en dessous du pneu ; et mesurer le nombre total d'essieux supportant des pneus qui sont en contact avec la route sur la base d'une continuité entre les premières distances et les deuxièmes distances agencées entre la position du pneu et la position extérieure au pneu.

2. Dispositif de mesure de nombre d'essieux (30, 30a, 130) selon la revendication 1,
dans lequel l'unité de mesure (34) est configurée pour déterminer la continuité sur la base d'une quantité de passage des premières distances aux deuxièmes distances concernant le pneu.

3. Dispositif de mesure de nombre d'essieux (30, 30a, 130) selon la revendication 1 ou 2,
dans lequel l'unité de mesure (34) est configurée pour déterminer que le pneu n'est pas en contact avec la route lorsque les deuxièmes distances sont supérieures aux premières distances d'une quantité supérieure à une quantité prédéterminée au moment du passage des premières distances aux deuxièmes distances.

4. Dispositif de mesure de nombre d'essieux (30, 30a, 130) selon l'une quelconque des revendications 1, 2, et 3,
dans lequel le capteur de distance obtient l'image de profondeur (P2) par un procédé de temps de vol (TOF), et
l'image de profondeur (P2) comporte les premières distances et les deuxièmes distances mesurées par le procédé TOF.

5. Dispositif de mesure de nombre d'essieux (30, 30a, 130) selon l'une quelconque des revendications 1 à 4,
dans lequel l'image capturée (P1) et l'image de profondeur (P2) sont des images capturées en même temps.

6. Dispositif de mesure de nombre d'essieux (30, 30a, 130) qui mesure un nombre total d'essieux d'un véhicule (40) qui se déplace sur une route, le dispositif de mesure de nombre d'essieux (30, 30a, 130) comprenant :
une première unité d'obtention (31) configurée pour obtenir, à partir d'un premier dispositif d'imagerie qui comporte un capteur d'images, une image capturée (P1) qui comporte un pneu du véhicule (40) ;
un détecteur (33) configuré pour détecter le pneu à partir de l'image capturée (P1) ;
une deuxième unité d'obtention (32) configurée pour obtenir, à partir d'un deuxième dispositif d'imagerie qui comporte un capteur de distance, une image de profondeur (P2) qui comporte le pneu du véhicule (40) ;
une unité de détermination (35) configurée pour déterminer si l'image capturée (P1) est une image capturée dans un environnement dont la luminosité est supérieure ou égale à un niveau prédéterminé ; et
une unité de mesure (34) configurée pour mesurer un nombre total d'essieux supportant des pneus qui sont en contact avec la route sur la base d'un résultat de la détermination par l'unité de détermination (35),
dans lequel, (i) si l'unité de détermination (35) détermine que l'image capturée (P1) est une image capturée dans un environnement dont la luminosité est supérieure ou égale à un niveau prédéterminé, l'unité de mesure (34) est configurée pour déterminer, à partir de l'image capturée (P1), si le pneu est en contact avec la route, et mesurer le nombre total d'essieux supportant des pneus qui sont en contact avec la route sur la base d'un résultat de détermination précisant si le pneu est en contact avec la route, et (ii) si l'unité de détermination (35) détermine que l'image capturée (P1) n'est pas une image capturée dans un environnement dont la luminosité est supérieure ou égale au niveau prédéterminé, l'unité de mesure (34) est configurée pour : identifier une position du pneu dans l'image de profondeur (P2) sur la base d'informations de position indiquant la position du pneu dans l'image capturée (P1) ; obtenir des premières distances entre une position prédéterminée et le pneu identifié, et deuxièmes distances entre la position prédéterminée et une position extérieure au pneu identifié, la position extérieure au pneu étant la route en dessous du pneu ; et mesurer le nombre total d'essieux supportant des pneus qui sont en contact avec la route sur la base d'une continuité entre les premières distances et les deuxièmes distances agencées entre la position du pneu et la position extérieure au pneu.

7. Système de mesure de nombre d'essieux comprenant :
le dispositif de mesure de nombre d'essieux (30, 30a, 130) selon l'une quelconque des revendications 1 à 6 ;
un premier dispositif d'imagerie qui capture l'image capturée (P1) ; et
un deuxième dispositif d'imagerie qui effectue une capture d'image pour générer l'image de profondeur (P2).

8. Procédé de mesure de nombre d'essieux pour mesurer un nombre total d'essieux d'un véhicule (40) qui se déplace sur une route, le procédé de mesure de nombre d'essieux comprenant :
une première obtention pour obtenir, à partir d'un premier dispositif d'imagerie qui comporte un capteur d'images, une image capturée (P1) qui comporte un pneu du véhicule (40) ;
la détection du pneu à partir de l'image capturée (P1) ;
une deuxième obtention pour obtenir, à partir d'un deuxième dispositif d'imagerie qui comporte un capteur de distance, une image de profondeur (P2) qui comporte le pneu du véhicule (40) ; et
la mesure d'un nombre total d'essieux supportant des pneus qui sont en contact avec la route sur la base d'informations de position indiquant la position du pneu dans l'image capturée (P1) et l'image de profondeur (P2),
dans lequel la mesure comporte : l'identification d'une position du pneu dans l'image de profondeur (P2) obtenue par le deuxième dispositif d'image sur la base d'un résultat de détection des informations de position indiquant la position du pneu dans l'image capturée (P1) ; l'obtention de premières distances entre une position prédéterminée et le pneu identifié, et deuxièmes distances entre la position prédéterminée et une position extérieure au pneu identifié, la position extérieure au pneu étant la route en dessous du pneu ; et la mesure du nombre total d'essieux supportant des pneus qui sont en contact avec la route sur la base d'une continuité entre les premières distances et les deuxièmes distances agencées entre la position du pneu et la position extérieure au pneu.

9. Procédé de mesure de nombre d'essieux (30, 30a, 130) selon la revendication 3,
dans lequel le détecteur (33) est en outre configuré pour détecter une roue à l'intérieur du pneu à partir de l'image capturée (P1), et
l'unité de mesure (34) est configurée pour obtenir des troisièmes distances entre la position prédéterminée et la roue du pneu, et
la quantité prédéterminée est supérieure à une différence entre les premières distances et les troisièmes distances.

10. Procédé de mesure de nombre d'essieux selon la revendication 8,
dans lequel la détection comporte en outre la détection d'une roue à l'intérieur du pneu à partir de l'image capturée (P1), et
la mesure comporte l'obtention de troisièmes distances entre la position prédéterminée et la roue du pneu, et la détermination du fait que le pneu n'est pas en contact avec la route lorsque les deuxièmes distances sont supérieures aux premières distances d'une différence entre les premières distances et les troisièmes distances au moment du passage des premières distances aux deuxièmes distances.
